# EUROPÄISCHE PATENTSCHRIFT

(11) **EP 0 752 545 B1**
(45) Veröffentlichungstag und Bekanntmachung des Hinweises auf die Patenterteilung: **07.11.2001**
(21) Anmeldenummer: 96109600.5
(22) Anmeldetag: 14.06.1996
(51) Int. Cl.: F16H 47/02, F16H 59/46, F16H 61/40

(54) **Hydrostatischer Antrieb mit nachgeschaltetem Stufenschaltgetriebe**
Hydrostatic drive with shift gearing added downstream
Entraînement hydrostatique avec transmission étagée reliée en aval

(30) Priorität: 03.07.1995 DE 19524189
(43) Veröffentlichungstag der Anmeldung: 08.01.1997
(73) Patentinhaber: BRUENINGHAUS HYDROMATIK GMBH, 89275 Elchingen (DE)
(72) Erfinder: Sommer, Josef, 89610 Oberdischingen (DE)
(74) Vertreter: Körber, Wolfhart, Dr. rer.nat.

(56) Entgegenhaltungen:
- DE-A- 3 433 494
- DE-A- 4 340 126
- US-A- 4 368 798
- PATENT ABSTRACTS OF JAPAN vol. 016, no. 410 (M-1302), 28. August 1992 (1992-08-28) & JP 04 136555 A (HITACHI CONSTR MACH CO LTD), 11. Mai 1992 (1992-05-11)
- PATENT ABSTRACTS OF JAPAN vol. 012, no. 160 (M-697), 14. Mai 1988 (1988-05-14) & JP 62 278366 A (KOMATSU LTD), 3. Dezember 1987 (1987-12-03)

## Beschreibung

Die Erfindung betrifft einen hydrostatischen Antrieb mit einem nachgeschalteten Stufenschaltgetriebe.

Aus der DE 34 33 494 A1 ist ein hydrostatischer Antrieb bekannt, bei dem während des Hochschaltens und des Herunterschaltens des Stufenschaltgetriebes das Fördervolumen der als Verstellpumpe ausgebildeten Hydropumpe so weit verringert bzw. vergrößert wird, daß sich die Drehzahl der Antriebswelle um dasjenige Maß verringert bzw. vergrößert, das der durch die Schaltstufe bedingten Drehzahländerung entspricht.

Im Patent JP 04 136 555 ist ein hydrostatischer Antrieb mit hydrostatischen Getriebe und einem nachgeschalteten Schaltgetriebe zu entnehmen, bei dem eine Steuereinrichtung 16 die Eingangsgeschwindigkeit des Schaltgetriebes unter Berücksichtigung dessen von einem Ausgangsgeschwindigkeitssensor 18 ermittelten Ausgangsgeschwindigkeit und einer reduzierenden Gangstufe steuert, die von einer Geschwindigkeitssteuervorrichtung 14 geschaltet wird. Bei einem Gangwechsel in eine niedrige Gangstufe schaltet eine Schalteinrichtung 12 das Getriebe 5 in eine Neutralstellung. Gleichzeitig werden Drehgeschwindigkeitssteuervorrichtungen 8, 9 in Funktion gesetzt und es wird der Gangwechsel ausgeführt, wenn der Geschwindigkeitsunterschied zwischen der Ausgangsgeschwindigkeit des hydrostatischen Getriebes und der Eingangsgeschwindigkeiten des Schaltgetriebes einen bestimmten Wert nicht übersteigt. Insbesondere offenbart dieses Dokument folgende Merkmale der Ansprüche 1 und 2 :
Ein hydrostatischer Antrieb mit einem Antriebsmotor, mit einem hydrostatischen Getriebe, dessen Übersetzungsverhältnis verstellbar ist und das wenigstens zwei in einem hydraulischen Kreislauf angeordnete Hydromaschinen in Form einer vom Antriebsmotor angetriebenen Hydropumpe 2 und eines Hydromotors 4, dessen Verdrängungsvolumen verstellbar ist, sowie eine Verstelleinrichtung umfaßt, die in Abhängigkeit von Stellsignalen das Übersetzungsverhältnis (i = Verdrängungsvolumen der Hydropumpe/ Verdrängungsvolumen des Hydromotors) verstellt, mit einem mechanischen Stufengetriebe 5, das über eine Antriebswelle mit dem Hydromotor in Verbindung steht und eine Schalteinrichtung 12 umfaßt, die in Abhängigkeit von Schaltsignalen die Schaltvorgänge durchführt, und mit einer elektronischen Steuereinheit, die an eine erste Sensoreinrichtung 17 zum Erfassen der eingangsseitigen Drehzahl des Stufenschaltgetriebes sowie an die Verstelleinrichtung und die Schalteinrichtung angeschlossen ist und zur Durchführung eines Schaltvorganges die Schalteinrichtung sowie die Verstelleinrichtung derart ansteuert, daß der kleinere Gang eingelegt und das Übersetzungsverhältnis des hydrostatischen Getriebes entsprechend der durch den Stufenschaltsprung bedingten Drehzahländerung beim Herunterschalten vergrößert wird.

Das Patent offenbart auch folgende weitere Merkmale des Anspruchs 1: Eine zweite Sensoreinrichtung 18 zum Erfassen der ausgangsseitigen Drehzahl des Stufenschaltgetriebes und, daß beim Herunterschalten
- die elektronische Steuereinheit durch entsprechende Ansteuerung der Schalteinrichtung den Hydromotor den jeweils eingelegten Gang ausrückt,
- die elektronische Steuereinheit die Ausgangssignale der ersten und zweiten Sensoreinrichtung miteinander vergleicht und durch entsprechende Ansteuerung der Verstelleinrichtung den Hydromotor innerhalb des ursprünglichen Quadranten auf ein Verdrängungsvolumen größer als Null ausschwenkt, bis die Ausgangssignale der Sensoreinrichtungen anzeigen, daß das Verhältnis von eingangs- und ausgangsseitiger Drehzahl des Stufenschaltgetriebes dem Übersetzungsverhältnis des kleineren Gangs entspricht, und
- die elektronische Steuereinheit durch entsprechende Ansteuerung der Schalteinrichtung den kleineren Gang einrückt.

Bei hydrostatischen Antrieben, bei denen die Hydropumpe außer den Antriebsrädern des Fahrzeugs auch weitere Verbraucher antreibt, wird der Betrieb dieser weiteren Verbraucher bei jedem Schaltvorgang durch die entsprechende Veränderung des Fördervolumens und damit der Antriebsleistung der Hydropumpe beeinträchtigt. Außerdem hat sich in der Praxis gezeigt, daß die Schaltvorgänge nicht ruckfrei bzw. nicht ausreichend schnell durchgeführt werden können.

Es ist Aufgabe der Erfindung, einen hydrostatischen Antrieb so weiterzubilden, daß die Schaltvorgänge ruckfrei und mit ausreichender Geschwindigkeit durchgeführt werden können, ohne daß der Betrieb weitere, von der Hydropumpe angetriebener Verbraucher beeinträchtigt wird.

Diese Aufgabe wird erfindungsgemäß durch die Merkmale des Anspruches 1 und des Anspruches 2 gelöst.

Der Erfindung liegt die Erkenntnis zugrunde, daß während des Schaltvorganges in einem entkoppelten Zustand zwischen dem hydrostatischen Getriebe und er ausgangsseitigen Antriebswelle des Schaltgetriebes (ausgerückter Gang im Anspruch 1 oder geöffnete Trennkupplung im Anspruch 2) eine Zwischenbeschleunigung oder Zwischenabbremsung durch den Hydromotor zu erfolgen hat, um eine Drehzahlsynchronisierung zwischen der ein- und ausgangsseitigen Abtriebswelle des Stufenschaltgetriebes (Anspruch 1) bzw. an der Trennkupplung (Anspruch 2) zu erreichen.

Die Ansprüche 3 bis 16 betreffen vorteilhafte Weiterbildungen der Erfindung.

Nach Anspruch 5 kann das Übersetzungsverhältnis des hydrostatischen Getriebes durch eine Variation des Verdrängungsvolumens der Hydropumpe zusätzlich verändert werden.

Vorteilhaft ist es gemäß Anspruch 6, an dem Antriebsmotor einen weiterer Drehzahlsensor vorzusehen. In Verbindung mit Anspruch 7 kann dabei die Ansteuerung der Verstelleinrichtung der Hydropumpe so erfolgen, daß die Hydropumpe mit steigender Drehzahl des Antriebsmotors auf größeres Verdrängungsvolumen ausschwenkt. Während des Schaltvorganges ist es nach Anspruch 8 vorteilhaft, die Verstelleinrichtung der Hydropumpe so anzusteuern, daß das Verdrängungsvolumen der Hydropumpe konstant bleibt, um eine Drehzahlbegrenzung der während des Schaltvorganges lastfrei arbeitenden Hydropumpe zu erreichen. Die Hydropumpe kann während des Schaltvorganges in einer Art Blockzustand gegen eine Druckbegrenzungseinrichtung nach Anspruch 10 arbeiten.

Nach den Ansprüchen 13 und 14 kann die Welle der Hydropumpe mittels einer Trennkupplung trennbar unmittelbar mit der Eingangswelle des Stufenschaltgetriebes verbunden sein, um im Schnellfahrbetrieb eine Überbrückung des hydrostatischen Getriebes zu ermöglichen.

Nachstehend ist die Erfindung anhand zweier Ausführungsbeispiele unter Bezugnahme auf die Zeichnung näher beschrieben; es zeigen:
- Fig. 1: einen Schaltplan eines hydrostatischen Antriebs gemäß dem ersten Ausführungsbeispiel der Erfindung, und
- Fig. 2: einen Schaltplan eines hydrostatischen Getriebes gemäß dem zweiten Ausführungsbeispiel der Erfindung.

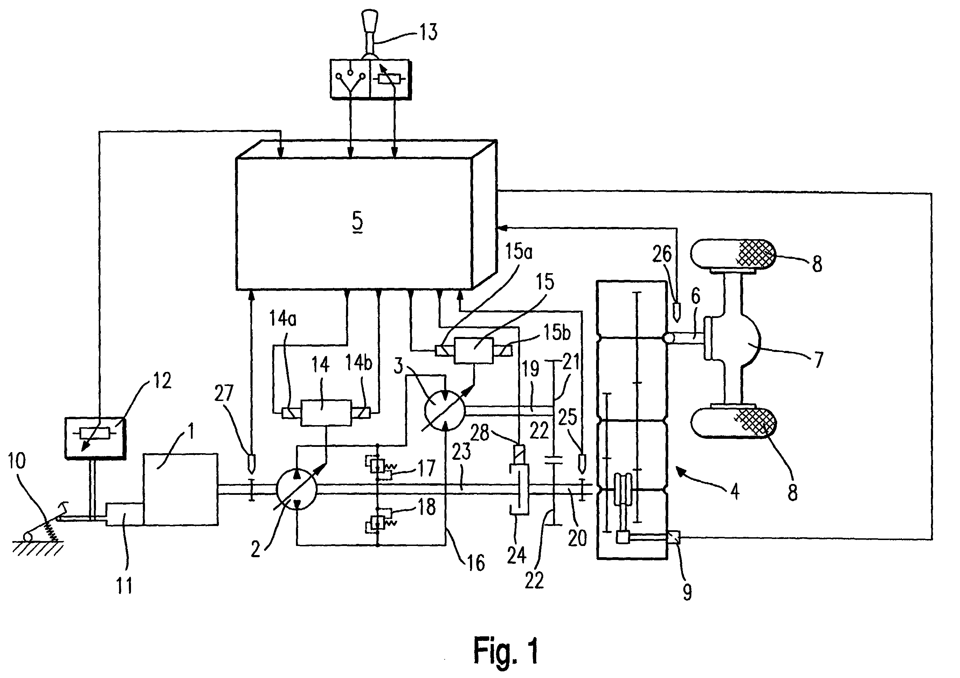

Der hydrostatische Antrieb gemäß dem in Fig. 1 dargestellten ersten Ausführungsbeispiel ist als Fahrantrieb für Fahrzeuge vorgesehen und umfaßt u.a. einen Antriebsmotor 1, ein hydrostatisches Getriebe 2, 3, 16 mit einer Hydropumpe 2 und einem Hydromotor 3, ein dem hydrostatischen Getriebe nachgeordnetes mechanisches Stufenschaltgetriebe 4 und eine elektronische Steuereinheit 5.

Die Ausgangswelle 6 des Stufenschaltgetriebes 4 treibt über ein Differential 7 die Fahrzeugräder 8. Über eine Schalteinrichtung 9 ist das Stufenschaltgetriebe 4 zwischen zumindest zwei Schaltstufen oder Gängen schaltbar. Die Schalteinrichtung 9 des Stufenschaltgetriebes 4 steht mit der elektronischen Steuereinheit 5 in Verbindung und wird durch diese angesteuert.

Die Fahrgeschwindigkeit des Fahrzeuges wird durch den Fahrzeugführer über das Pedal 10 bestimmt, wobei die Betätigung des Pedals 10 von der Einspritzpumpe 11 des Antriebsmotors 1 einwirkt. Gleichzeitig wird die Stellung des Pedals 10 durch eine geeignete Sensoreinrichtung, insbesondere ein Potentiometer, von der elektronischen Steuereinheit 5 erfaßt. Die Fahrtrichtung kann durch einen Fahrhebel 13 vorgegeben werden.

Im dargestellten Ausführungsbeispiel ist sowohl das Verdrängungsvolumen der Hydropumpe 2 als auch das Verdrängungsvolumen des Hydromotors 3 über zugeordnete Verstelleinrichtungen 14 und 15 in bekannter Weise durch Variation der Neigung einer Schrägscheibe oder Taumelscheibe verstellbar. Der Hydromotor 3 arbeitet erfindungsgemäß als reversierbarer Hydromotor, d.h. der Neigungswinkel der Schräg- oder Taumelscheibe ist bis in einen negativen Winkelbereich verschwenkbar. Die Hydropumpe 2 und der Hydromotor 3 sind in bekannter Weise durch einen Hydraulikkreislauf 16 miteinander verbunden, wobei vorteilhaft Druckbegrenzungseinrichtungen 17 und 18 vorzusehen sind. Die Betätigung der Verstelleinrichtungen 14 und 15 kann mittels Magnete 14a, 14b und 15a, 15b erfolgen. Die Ausgangswelle des Hydromotors 3 ist über ein hydromotorseitiges Antriebswellenteilstück 19 mit einem schaltgetriebeseitigen Antriebswellenteilstück 20 z.B. über Zahnräder 21, 22 in Eingriff. Vorzugsweise ist darüberhinaus eine Direktdurchtriebswelle 23 vorgesehen, die über eine Trennkupplung 24 unmittelbar mit dem schaltgetriebeseitigen Antriebswellenteilstück 20 koppelbar ist.

Ferner ist ein erster Sensor 25 zum Erfassen der eingangsseitigen Drehzahl des Stufenschaltgetriebes und ein zweiter Sensor 26 zum Erfassen der ausgangsseitigen Drehzahl des Stufenschaltgetriebes vorhanden. Vorzugsweise ist darüberhinaus ein dritter Sensor 27 zum Erfassen der Drehzahl des Antriebsmotors 1 vorgesehen. Die Direktdurchtriebswelle 23 in Verbindung mit der Trennkupplung 24 ermöglicht eine unmittelbare Koppelung des Antriebsmotors 1 mit dem schaltgetriebeseitigen Antriebswellenteilstück 20. Oberhalb einer vorgegebenen Drehzahl des Antriebsmotors schließt die Trennkupplung 24, so daß der Antriebsmotor 1 unmittelbar mit dem Stufenschaltgetriebe 4 verbunden ist. Dadurch wird das hydrostatische Getriebe 2, 3, 16 überbrückt, was im Schnellfahrbetrieb vorteilhaft ist, da dadurch Verluste im hydrostatischen Getriebe 2, 3, 16 vermieden werden und der Wirkungsgrad des Antriebs insgesamt erhöht wird. Die Trennkupplung 24 wird daher beim Überschreiten einer von dem Sensor 27 erfaßten Grenzdrehzahl des Antriebsmotors 1 durch Betätigen der Betätigungseinrichtung 28 geschlossen.

Nachfolgend wird die Funktion des erfindungsgemäßen Antriebs beschrieben.

Beim Anfahren des Fahrzeugs befindet sich das Stufenschaltgetriebe 4 in seinem niedrigsten Gang. Bei Aktivierung des Fahrantriebs wird zunächst der Hydromotor 3 über die Verstelleinrichtung 15 auf einen großen Neigungswinkel der Schräg- bzw. Taumelscheibe gestellt. Sodann wird über die Verstelivorrichtung 14 der Neigungswinkel der Schräg- bzw. Taumelscheibe der Hydropumpe 2 ausgehend von der Neutralstellung so weit ausgelenkt, bis die gewünschte Beschleunigung des Fahrzeugs erreicht ist. Wenn die Hydropumpe 2 ihre maximale Fördermenge erreicht hat, wird zur weiteren Erhöhung der Fahrzeuggeschwindigkeit die Schluckmenge des Hydromotors 3 verringert. Dazu wird über die Verstellvorrichtung 15 die Neigung der Schräg- oder Taumelscheibe des Hydromotors 3 bis hin zu einer minimalen Schluckmenge reduziert.

Wenn die Schräg- oder Taumelscheibe der Hydropumpe 2 ihren größten Neigungswinkel und die Schräg- oder Taumelscheibe des Hydromotors 3 ihren minimalen Neigungswinkel erreicht hat, läßt sich das Übersetzungsverhältnis des hydrostatischen Getriebes 2, 3, 16 nicht weiter erhöhen. Es ist dann notwendig, das Stufenschaltgetriebe 4 in den nächst höheren Gang zu schalten. Bei Erreichen eines von der elektronischen Steuereinheit 5 vorgegebenen Schaltpunktes wird daher zunächst der Hydromotor 3 mittels der Verstelleinrichtung 15 in Neutralstellung gebracht. Die Hydropumpe 2 kann dabei ausgesteuert bleiben und in einer Art Blockzustand gegen die Druckbegrenzungseinrichtungen 17 und 18 arbeiten. Sodann betätigt die elektronische Steuereinheit 5 über die Schalteinrichtung 9 das Stufenschaltgetriebe 4, um den eingelegten Gang auszurücken.

Erfindungswesentlich erfolgt in diesem Zustand mit ausgerücktem Gang des Stufenschaltgetriebes 4 eine Synchronisation des Stufenschaltgetriebes 4. Dazu werden von der elektronischen Steuereinheit 5 die eingangsseitige und ausgangsseitige Drehzahl des Stufenschaltgetriebes 4 mittels der Sensoren 25 und 26 fortwährend erfaßt. Sodann wird die Schräg- oder Taumelscheibe des Hydromotors 3 mittels der Verstelleinrichtung 15 in eine zum vorbeschriebenen Antriebsbetrieb entgegengesetzte Richtung (mit negativem Schwenkwinkel) ausgeschwenkt. Dadurch arbeitet der Hydromotor 3 gegen den anstehenden Arbeitsdruck der Hydropumpe 2 und wird dadurch rasch abgebremst. Entsprechend verringert sich die Drehzahl des hydromotorseitigen Antriebswellenabschnitts 19 und des schaltgetriebeseitigen Antriebswellenstücks 20. Wenn das Verhältnis der mittels der Sensoren 25 und 26 erfaßten Drehzahlen mit dem Übersetzungsverhältnis des neu einzulegenden höheren Ganges des Stufenschaltgetriebes 4 übereinstimmt, wird der Synchronisationsvorgang beendet, indem die Schräg- oder Taumelscheibe des Hydromotors 3 in ihre Neutralstellung zurückgeschwenkt wird. Der Hydromotor 3 wird dadurch momentenfrei.

Nunmehr kann durch Betätigung der Schalteinrichtung 9 der neu einzulegende höhere Gang des Stufenschaltgetriebes 4 eingerückt werden. Nachdem der höhere Gang des Stufenschaltgetriebes 4 eingelegt ist, wird die Schräg- oder Taumelscheibe des Hydromotors 3 wieder in Antriebsrichtung ausgeschwenkt. Bei der Auslenkung des Hydromotors wird in der aus der DE 34 33 494 A1 bekannten Weise berücksichtigt, daß das Übersetzungsverhältnis des hydrostatischen Getriebes 2, 3, 16 entsprechend dem Stufenschaltsprung des Stufenschaltgetriebes 4 verringert werden muß.

Die weitere Erhöhung des Übersetzungsverhältnisses bei weiter zunehmender Fahrzeuggeschwindigkeit kann wiederum stufenlos durch das hydrostatische Getriebe 2, 3, 16 erfolgen, bis - falls das Stufenschaltgetriebe 4 mehr als zwei Schaltstufen aufweist - der nächste Schaltpunkt des Stufenschaltgetriebes 4 erreicht ist.

In umgekehrter Weise wird beim Herunterschalten des Stufenschaltgetriebes 4 verfahren.

Zunächst wird der Hydromotor 3 mittels der Verstellvorrichtung 15 in seine Neutralstellung gebracht. Sodann wird der eingelegte Gang des Stufenschaltgetriebes 4 mittels der Schalteinrichtung 9 ausgerückt. Anschließend erfolgt die Synchronisation des Stufenschaltgetriebes 4. Im Gegensatz zum oben beschrieben Hochschalten des Stufenschaltgetriebes 4 wird jedoch beim Herunterschalten des Stufenschaltgetriebes 4 die Schräg- oder Taumelscheibe des Hydromotors 3 nicht entgegen, sondern in Antriebsrichtung ausgeschwenkt, um die Drehzahl des hydromotorseitigen Antriebswellenteilstücks 19 und des schaltgetriebeseitigen Antriebswellenteilstücks 20 zu erhöhen. Wenn das Verhältnis der durch die Sensoren 25 und 26 erfaßten eingangsseitigen und ausgangsseitigen Drehzahlen des Stufenschaltgetriebes 4 in einem Verhältnis stehen, das dem neu einzulegenden, niedrigeren Gang des Stufenschaltgetriebes 4 entspricht, wird der Synchronisationsvorgang dadurch beendet, daß der Hydromotor 3 mittels der Verstelleinrichtung 15 in seine Neutralstellung geschwenkt wird. Dadurch wird der Hydromotor 3 momentenfrei und der neu einzurückende niedrigere Gang des Stufenschaltgetriebes 4 kann mittels der Schalteinrichtung 9 eingerückt werden. Sodann wird der Hydromotor 3 wieder in Antriebsrichtung ausgeschwenkt, wobei in bekannter Weise zu berücksichtigen ist, daß das Übersetzungsverhältnis des hydrostatischen Getriebes 2, 3, 16 entsprechend der durch den Stufenschaltsprung des Stufenschaltgetriebes 4 bedingten Drehzahländerung vergrößert werden muß.

Durch die erfindungsgemäße Synchronisation können die Schaltvorgänge im wesentlichen ruckfrei und mit ausreichender Geschwindigkeit durchgeführt werden, ohne daß der Betrieb weiterer, von der Hydropumpe angetriebener und in der Zeichnung aus Vereinfachungsgründen nicht dargestellter Verbraucher beeinträchtigt wird.

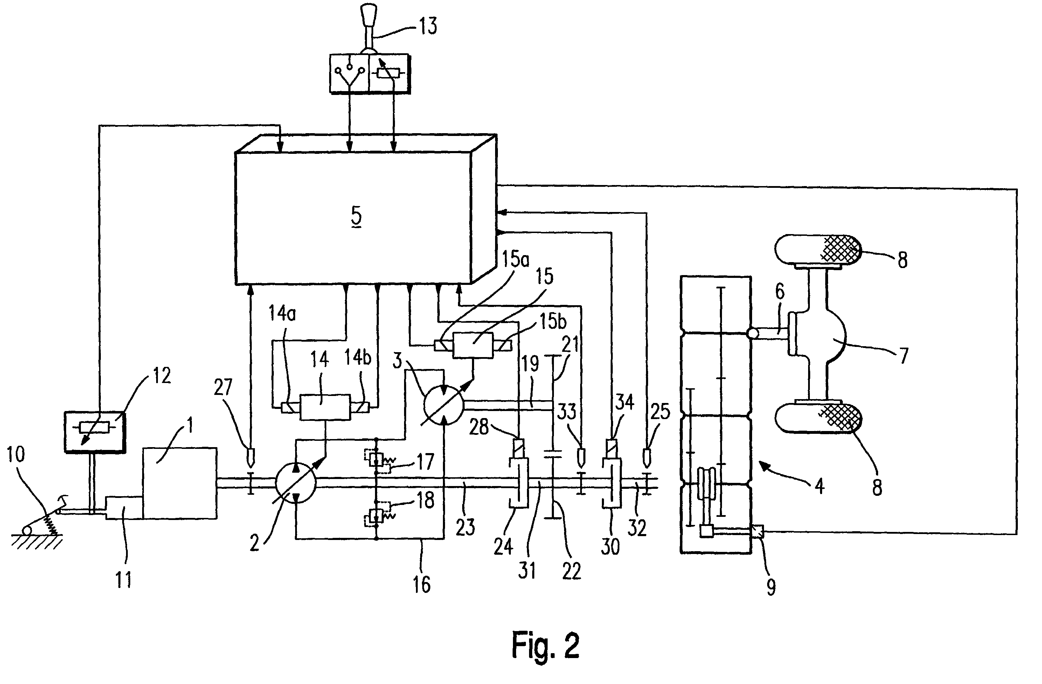

Figur 2 zeigt ein zweites, alternatives Ausführungsbeispiel der Erfindung. Die bereits anhand von Fig. 1 beschriebenen Elemente des Ausführungsbeispiels sind mit den gleichen Bezugszeichen versehen und werden nachfolgend, um Wiederholungen zu vermeiden, nicht nochmals beschrieben.

Im Gegensatz zu dem anhand von Fig. 1 beschriebenen Ausführungsbeispiel ist eine zweite Trennkupplung 30 vorgesehen, die das schaltgetriebeseitige Antriebswellenteilstück in einen hydromotorseitigen Antriebswellenabschnitt 31 und einen schaltgetriebeseitigen Antriebswellenabschnitt 32 unterteilt. Zum Erfassen der Drehzahl des schaltgetriebeseitigen Antriebswellenabschnitts 32 ist ein erster Sensor 25 vorgesehen, während zum Erfassen der Drehzahl des hydromotorseitigen Antriebswellenabschnitts 31 ein zweiter Sensor 33 vorgesehen ist.

Die Synchronisation erfolgt bei diesem Ausführungsbeispiel in etwas abgewandelter Weise. Zunächst wird der Hydromotor 3 mittels der Verstelleinrichtung 15 in seine Neutralstellung geschwenkt und wird dadurch momentenfrei. Sodann wird mittels der Betätigungseinrichtung 34 die Trennkupplung 30 geöffnet und nachfolgend durch Betätigung der Schalteinrichtung 9 beim zunächst zu beschreibenden Hochschalten der nächst höhere Gang des Stufenschaltgetriebes 4 eingelegt. Sodann wird durch Ausschwenken des Hydromotors 3 in zur Antriebsrichtung entgegengesetzter Schwenkrichtung die Drehzahl des hydromotorseitigen Antriebswellenteilstücks 19 und somit auch des hydromotorseitigen Antriebswellenabschnitts 31 so lange reduziert, bis die von dem Sensor 33 erfaßte Drehzahl mit der von dem Sensor 25 erfaßten Drehzahl im wesentlichen übereinstimmt. Sodann wird der Hydromotor 3 wieder in seine Neutralstellung zurückgeschwenkt und die Trennkupplung 30 geschlossen. Anschließend kann der Hydromotor 3 wieder in Antriebsrichtung ausgeschwenkt werden, wobei in bekannter Weise zu berücksichtigen ist, daß das Übersetzungsverhältnis des hydrostatischen Getriebes entsprechend der durch den Stufenschaltschwung beim Hochschalten des Stufenschaltgetriebes 4 bedingten Drehzahländerung zu verringern ist.

In umgekehrter Weise wird beim Herunterschalten vorgegangen. Auch hier wird zunächst der Hydromotor 3 in seine Neutralstellung geschwenkt und die Trennkupplung 30 geöffnet. Sodann wird mittels der Schalteinrichtung 9 der nächst niedrigere Gang des Stufenschaltgetriebes 4 eingelegt. Bei der nachfolgenden Synchronisierung wird durch Verschwenken des Hydromotors 3 in Antriebsrichtung die Drehzahl des hydromotorseitigen Antriebswellenteilstücks 19 und somit des hydromotorseitigen Antriebswellenabschnitts 31 erhöht. Der Synchronisationsvorgang wird beendet, wenn die von dem Sensor 33 erfaßte Drehzahl des hydromotorseitigen Antriebswellenabschnitts mit der von dem Sensor 25 erfaßten Drehzahl des schaltgetriebeseitigen Antriebswellenabschnitts im wesentlichen übereinstimmt. Nach Beendigung der Synchronisation wird der Hydromotor 3 in seine Neutralstellung zurückgeschwenkt und die Trennkupplung 30 geschlossen. Sodann wird der Hydromotor 3 wieder auf ein Verdrängungsvolumen größer als Null ausgeschwenkt, wobei auch hier in bekannter Weise zu berücksichtigen ist, daß das Übersetzungsverhältnis des hydrostatischen Getriebes entsprechend der durch den Stufenschaltsprung beim Herunterschalten des Stufenschaltgetriebes 4 bedingten Drehzahländerung vergrößert werden muß.

Auch bei diesem Ausführungsbeispiel können die Schaltvorgänge ruckfrei und mit ausreichender Geschwindigkeit durchgeführt werden, ohne daß der Betrieb weiterer, von der Hydropumpe angetriebener Verbraucher beinträchtigt wird.

Die Erfindung ist nicht auf die vorbeschriebenen Ausführungsbeispiele beschränkt. Anstelle einer elektromechanischen Einwirkung der elektronischen Steuereinheit 5 auf die einzelnen Verstell-, Schalt- und Betätigungseinrichtungen 14a, 14b, 15a, 15b, 9; 28 und 34 ist z.B. auch eine hydraulische oder pneumatische Einwirkung vorteilhaft möglich. Als Hydropumpe 2 kann auch eine solche mit festem, nicht regelbaren Verdrängungsvolumen Verwendung finden.

## Patentansprüche

1. Hydrostatischer Antrieb, insbesondere für Fahrzeuge,
- mit einem Antriebsmotor (1),
- mit einem hydrostatischen Getriebe (2, 3, 16), dessen Übersetzungsverhältnis verstellbar ist und das wenigstens zwei in einem hydraulischen Kreislauf angeordnete Hydromaschinen (2, 3) in Form einer vom Antriebsmotor angetriebenen Hydropumpe (2) und eines Hydromotors (3) sowie eine Verstelleinrichtung (15) umfaßt, die in Abhängigkeit von Stellsignalen das Übersetzungsverhältnis (i = Verdrängungsvolumen der Hydropumpe/Verdrängungsvolumen des Hydromotors) verstellt,
- mit einem mechanischen Stufenschaltgetriebe (4), das über eine Antriebswelle (19, 20) mit dem Hydromotor (3) in Verbindung steht und eine Schalteinrichtung (9) umfaßt, die in Abhängigkeit von Schaltsignalen die Schaltvorgänge durchführt, und
- mit einer elektronischen Steuereinheit (5), die an eine erste Sensoreinrichtung (25) zum Erfassen der eingangsseitigen Drehzahl des Stufenschaltgetriebes (4) sowie an die Verstelleinrichtung (15) und die Schalteinrichtung (9) angeschlossen ist und zur Durchführung eines Schaltvorganges die Schalteinrichtung (9) sowie die Verstelleinrichtung (15) derart ansteuert, daß der jeweils größere bzw. kleinere Gang eingelegt und das Übersetzungsverhältnis des hydrostatischen Getriebes (2, 3, 16) entsprechend der durch den Stufenschaltsprung bedingten Drehzahländerung beim Hochschalten verringert und beim Herunterschalten vergrößert wird, wobei der Hydromotor (3) ein reversierbarer Hydromotor ist, dessen Verdrängungsvolumen mittels der Verstelleinrichtung (15) verstellbar ist,
wobei eine zweite Sensoreinrichtung (26) zum Erfassen der ausgangsseitigen Drehzahl des Stufenschaltgetriebes (4) vorgesehen ist, und
wobei bei jedem Schaltvorgang
- die elektronische Steuereinheit (5) durch entsprechende Ansteuerung der Verstelleinrichtung (15) und der Schalteinrichtung (9) den Hydromotor (3) auf Null-Verdrängungsvolumen zurückschwenkt und den jeweils eingelegten Gang ausrückt,
- die elektronische Steuereinheit (5) die Ausgangssignale der ersten und zweiten Sensoreinrichtung (25, 26) miteinander vergleicht und durch entsprechende Ansteuerung der Verstelleinrichtung (15) den Hydromotor (3) sowohl beim Hochschalten in den dem Reversierbetrieb entsprechenden Quadranten als auch beim Herunterschalten innerhalb des ursprünglichen Quadranten auf ein Verdrängungsvolumen größer als Null ausschwenkt, bis die Ausgangssignale der Sensoreinrichtungen (25, 26) anzeigen, daß das Verhältnis von eingangs- und ausgangsseitiger Drehzahl des Stufenschaltgetriebes (4) dem Übersetzungsverhältnis des jeweils größeren bzw. kleineren Gangs entspricht, und
- die elektronische Steuereinheit (5) durch entsprechende Ansteuerung der Verstelleinrichtung (15) den Hydromotor (3) auf Null-Verdrängungsvolumen zurückschwenkt, durch entsprechende Ansteuerung der Schalteinrichtung (9) den jeweils größeren bzw. kleineren Gang einrückt und durch entsprechende Ansteuerung der Verstelleinrichtung (15) den Hydromotor (3) auf ein Verdrängungsvolumen größer als Null ausschwenkt.

2. Hydrostatischer Antrieb, insbesondere für Fahrzeuge,
- mit einem Antriebsmotor (1),
- mit einem hydrostatischen Getriebe (2, 3, 16), dessen Übersetzungsverhältnis verstellbar ist und das wenigstens zwei in einem hydraulischen Kreislauf angeordnete Hydromaschinen (2, 3) in Form einer vom Antriebsmotor angetriebenen Hydropumpe (2) und eines Hydromotors (3) sowie eine Verstelleinrichtung (15) umfaßt, die in Abhängigkeit von Stellsignalen das Übersetzungsverhältnis (i = Verdrängungsvolumen der Hydropumpe/Verdrängungsvolumen des Hydromotors) verstellt,
- mit einem mechanischen Stufenschaltgetriebe (4), das über eine Antriebswelle (19, 20) mit dem Hydromotor (3) in Verbindung steht und eine Schalteinrichtung (9) umfaßt, die in Abhängigkeit von Schaltsignalen die Schaltvorgänge durchführt, und
- mit einer elektronischen Steuereinheit (5), die an eine erste Sensoreinrichtung (25) zum Erfassen der eingangsseitigen Drehzahl des Stufenschaltgetriebes (4) sowie an die Verstelleinrichtung (15) und die Schalteinrichtung (9) angeschlossen ist und zur Durchführung eines Schaltvorganges die Schalteinrichtung (9) sowie die Verstelleinrichtung (15) derart ansteuert, daß der jeweils größere bzw. kleinere Gang eingelegt und das Übersetzungsverhältnis des hydrostatischen Getriebes (2, 3, 16) entsprechend der durch den Stufenschaltsprung bedingten Drehzahländerung beim Hochschalten verringert und beim Herunterschalten vergrößert wird,
- und mit einer Trennkupplung (30), die in der Antriebswelle (19, 31, 32) angeordnet ist und diese in einen hydromotorseitigen (19, 31) und einen schaltgetriebeseitigen (32) Antriebswellenabschnitt teilt sowie mit einer Betätigungseinrichtung (34), die in Abhängigkeit von Steuersignalen die Trennkupplung (30) öffnet und schließt, wobei der Hydromotor (3) ein reversierbarer Hydromotor ist, dessen Verdrängungsvolumen mittels der Verstelleinrichtung (15) verstellbar ist, wobei eine zweite Sensoreinrichtung (33) zum Erfassen der hydromotorseitigen Drehzahl an der Trennkupplung (30) vorgesehen ist, und
daß bei jedem Schaltvorgang
- die elektronische Steuereinheit (5) durch entsprechende Ansteuerung der Verstelleinrichtung (15), der Betätigungseinrichtung (34) und der Schalteinrichtung (9) den Hydromotor (3) auf Null-Verdrängungsvolumen zurückschwenkt, die Trennkupplung (30) öffnet und das Stufenschaltgetriebe (4) in den jeweils einzulegenden Gang schaltet,
- die elektronische Steuereinheit (5) die Ausgangssignale der Sensoreinrichtungen (25, 33) miteinander vergleicht und durch entsprechende Ansteuerung der Verstelleinrichtung (15) den Hydromotor (3) sowohl beim Hochschalten in den dem Reversierbetrieb entsprechenden Quadranten als auch beim Herunterschalten innerhalb des ursprünglichen Quadranten auf ein Verdrängungsvolumen größer als Null ausschwenkt, bis die Ausgangssignale der Sensoreinrichtungen (25, 33) anzeigen, daß die Drehzahldifferenz über der Trennkupplung (30) im wesentlichen gleich Null ist, und
- die elektronische Steuereinheit (5) durch entsprechende Ansteuerung der Verstelleinrichtung (15) und der Betätigungseinrichtung (34) den Hydromotor (3) auf Null-Verdrängungsvolumen zurückschwenkt, die Trennkupplung (30) schließt und den Hydromotor (3) auf ein Verdrängungsvolumen größer als Null ausschwenkt.

3. Hydrostatischer Antrieb nach Anspruch 1,
**dadurch gekennzeichnet,**
**daß** die erste Sensoreinrichtung einen ersten Sensor (25) zum Erfassen der Drehzahl der Antriebswelle (20) des Stufenschaltgetriebes (4) und die zweite Sensoreinrichtung einen zweiten Sensor (26) zum Erfassen der Drehzahl der ausgangsseitigen Antriebswelle (6) umfaßt.

4. Hydrostatischer Antrieb nach Anspruch 2,
**dadurch gekennzeichnet,**
**daß** die erste Sensoreinrichtung einen ersten Sensor (25) zum Erfassen der Drehzahl des schaltgetriebesseitigen Antriebswellenabschnitts (32) des hydromotorseitigen Antriebswellenabschnitts (19, 31) und die zweite Sensoreinrichtung einen zweiten Sensor (33) zum Erfassen der Drehzahl des hydromotorseitigen Antriebswellenabschnitts (19, 31) umfaßt.

5. Hydrostatischer Antrieb nach einem vorhergehenden Anspruch,
**gekennzeichnet durch** eine an die elektronische Steuereinheit (5) angeschlossene weitere Verstelleinrichtung (14) zum Verstellen des Verdrängungsvolumens der Hydropumpe (2) in Abhängigkeit von Steuersignalen von der elektronischen Steuereinheit (5).

6. Hydrostatischer Antrieb nach Anspruch 5, wobei die Drehzahl des Antriebsmotors verstellbar ist,
**gekennzeichnet durch** einen dritten, an die elektronische Steuereinheit (5) angeschlossenen Sensor (27) zum Erfassen der Drehzahl des Antriebsmotors (1).

7. Hydrostatischer Antrieb nach Anspruch 6,
**dadurch gekennzeichnet,**
**daß** die elektronische Steuereinheit (5) die weitere Verstelleinrichtung (14) derart ansteuert, daß die Hydropumpe (2) mit steigender Drehzahl des Antriebsmotors (1) auf größeres Verdrängungsvolumen ausschwenkt.

8. Hydrostatischer Antrieb nach einem der Ansprüche 5 bis 7,
**dadurch gekenhzeichnet,**
**daß** die elektronische Steuereinheit (5) während jedes Schaltvorganges die weitere Verstelleinrichtung (14) derart ansteuert, daß das Verdrängungsvolumen der Hydropumpe (2) konstant bleibt.

9. Hydrostatischer Antrieb nach Anspruch 8,
**dadurch gekennzeichnet,**
**daß** die elektronische Steuereinheit (5) die weitere Verstelleinrichtung (14) derart ansteuert, daß die Hydropumpe (2) bei einer Drehzahl unterhalb der maximalen Drehzahl des Antriebsmotors (1) auf maximales Verdrängungsvolumen ausgeschwenkt ist.

10. Hydrostatischer Antrieb nach einem vorhergehenden Anspruch,
**gekennzeichnet durch** eine Druckbegrenzungseinrichtung (17, 18) zur Druckabsicherung des hydraulischen Kreislaufes des hydrostatischen Getriebes (2, 3, 16).

11. Hydrostatischer Antrieb nach einem vorhergehenden Anspruch,
**dadurch gekennzeichnet,**
**daß** die elektronische Steuereinheit (5) bei Erreichen eines gespeicherten Schaltpunktes wenigstens einen Schaltvorgang des Stufenschaltgetriebes (4) automatisch steuert.

12. Hydrostatischer Antrieb nach Anspruch 11,
**dadurch gekennzeichnet,**
**daß** der gespeicherte Schaltpunkt einem Drehzahlwert des Antriebsmotors (1) in dem Drehzahlbereich oberhalb derjenigen Drehzahl entspricht, bei der die Hydropumpe (2) auf maximales Verdrängungsvolumen ausgeschwenkt ist.

13. Hydrostatischer Antrieb nach einem vorhergehenden Anspruch,
**dadurch gekennzeichnet,**
**daß** die Antriebswelle (19, 20) bzw. der hydromotorseitige Antriebswellenabschnitt (19, 31) ein hydromotorseitiges Antriebswellenteilstück (19) und ein schaltgetriebeseitiges Antriebswellenteilstück (31) umfaßt.

14. Hydrostatischer Antrieb nach Anspruch 13,
**gekennzeichnet durch** eine die Hydropumpe (2) mechanisch mit dem schaltgetriebeseitigen Antriebswellenteilstück (31) koppelnde Direktdurchtriebswelle (23), **durch** eine in derselben angeordnete weitere Trennkupplung (24) und **durch** eine weitere, an die elektronische Steuereinheit (5) angeschlossene Betätigungseinrichtung (28), die in Abhängigkeit von Steuersignalen von der elektronischen Steuereinheit (5) die weitere Trennkupplung (24) öffnet und schließt.

15. Hydrostatischer Antrieb nach Anspruch 14,
**dadurch gekennzeichnet,**
**daß** die elektronische Steuereinheit (5) bei Erreichen eines weiteren gespeicherten Schaltpunktes die weitere Betätigungseinrichtung (28) automatisch derart ansteuert, daß die weitere Trennkupplung (24) bei steigender Drehzahl des Antriebsmotors (1) schließt und bei fallender Drehzahl öffnet, und daß dieser weitere Schaltpunkt einem weiteren Drehzahlwert des Antriebsmotors (1) oberhalb des vorerwähnten Drehzahlwertes entspricht.

16. Hydrostatischer Antrieb nach Anspruch 15,
**dadurch gekennzeichnet,**
**daß** die elektronische Steuereinheit (5) bei Ansteuerung der weiteren Betätigungseinrichtung (28) zwecks Schließen der weiteren Trennkupplung (24) die Verstelleinrichtungen (15) derart ansteuert, daß die Hydropumpe (3) und der Hydromotor (2) auf Null-Verdrängungsvolumen zurückgeschwenkt werden.

## Claims

1. Hydrostatic drive, in particular for vehicles,
- having a drive motor (1),
- having a hydrostatic transmission (2, 3, 16), the transmission ratio of which is adjustable and which comprises at least two hydraulic machines (2, 3) in the form of a hydraulic pump (2) driven by the drive motor and a hydraulic motor (3), which are disposed in a hydraulic circuit, as well as an adjusting device (15), which in dependence upon control signals adjusts the transmission ratio (i = displacement volume of the hydraulic pump/displacement volume of the hydraulic motor),
- having a mechanical multi-step shift transmission (4), which is connected by a drive shaft (19, 20) to the hydraulic motor (3) and comprises a shift device (9), which in dependence upon shift signals effects the shift operations, and
- having an electronic control unit (5), which is connected to a first sensor device (25) for detecting the input rotational speed of the multi-step shift transmission (4) as well as to the adjusting device (15) and the shift device (9) and which for effecting a shift operation controls the shift device (9) and the adjusting device (15) in such a way that the, in each case, higher or lower gear is engaged and the transmission ratio of the hydrostatic transmission (2, 3, 16) in accordance with the rotational speed change caused by the gear step is reduced in the case of an upshift and increased in the case of a downshift,
wherein the hydraulic motor (3) is a reversible hydraulic motor, the displacement volume of which is adjustable by means of the adjusting device (15),
wherein a second sensor device (26) for detecting the output rotational speed of the multi-step shift transmission (4) is provided, and
wherein during each shift operation
- the electronic control unit (5) through suitable control of the adjusting device (15) and the shift device (9) swings the hydraulic motor (3) back to zero displacement volume and disengages the respective engaged gear,
- the electronic control unit (5) compares the output signals of the first and second sensor device (25, 26) with one another and through suitable control of the adjusting device (15) swings out the hydraulic motor (3) both in the case of an upshift into the quadrant corresponding to reversing operation and in the case of a downshift within the original quadrant to a displacement volume greater than zero until the output signals of the sensor devices (25, 26) indicate that the ratio of input and output rotational speed of the multi-step shift transmission (4) corresponds to the transmission ratio of the, in each case, higher or lower gear, and
- the electronic control unit (5) through suitable control of the adjusting device (15) swings the hydraulic motor (3) back to zero displacement volume, through suitable control of the shift device (9) engages the, in each case, higher or lower gear and through suitable control of the adjusting device (15) swings out the hydraulic motor (3) to a displacement volume greater than zero.

2. Hydrostatic drive, in particular for vehicles,
- having a drive motor (1),
- having a hydrostatic transmission (2, 3, 16), the transmission ratio of which is adjustable and which comprises at least two hydraulic machines (2, 3) in the form of a hydraulic pump (2) driven by the drive motor and a hydraulic motor (3), which are disposed in a hydraulic circuit, as well as an adjusting device (15), which in dependence upon control signals adjusts the transmission ratio (i = displacement volume of the hydraulic pump/displacement volume of the hydraulic motor),
- having a mechanical multi-step shift transmission (4), which is connected by a drive shaft (19, 20) to the hydraulic motor (3) and comprises a shift device (9), which in dependence upon shift signals effects the shift operations, and
- having an electronic control unit (5), which is connected to a first sensor device (25) for detecting the input rotational speed of the multi-step shift transmission (4) as well as to the adjusting device (15) and the shift device (9) and which for effecting a shift operation controls the shift device (9) and the adjusting device (15) in such a way that the, in each case, higher or lower gear is engaged and the transmission ratio of the hydrostatic transmission (2, 3, 16) in accordance with the rotational speed change caused by the gear step is reduced in the case of an upshift and increased in the case of a downshift,
- and having a separating clutch (30), which is disposed in the drive shaft (19, 31, 32) and divides the latter into a hydraulic-motor-side (19, 31) and a shift-transmission-side (32) drive shaft portion, as well as having an actuating device (34), which in dependence upon control signals opens and closes the separating clutch (30),
wherein the hydraulic motor (3) is a reversible hydraulic motor, the displacement volume of which is adjustable by means of the adjusting device (15), wherein a second sensor device (33) is provided for detecting the hydraulic-motor-side rotational speed at the separating clutch (30), and
that during each shift operation
- the electronic control unit (5) through suitable control of the adjusting device (15), the actuating device (34) and the shift device (9) swings the hydraulic motor (3) back to zero displacement volume, opens the separating clutch (30) and shifts the multi-step shift transmission (4) into the respective gear which is to be engaged,
- the electronic control unit (5) compares the output signals of the sensor devices (25, 33) with one another and through suitable control of the adjusting device (15) swings out the hydraulic motor (3) both in the case of an upshift into the quadrant corresponding to reversing operation and in the case of a downshift within the original quadrant to a displacement volume greater than zero until the output signals of the sensor devices (25, 33) indicate that the rotational speed difference above the separating clutch (30) is substantially equal to zero, and
- the electronic control unit (5) through suitable control of the adjusting device (15) and the actuating device (34) swings the hydraulic motor (3) back to zero displacement volume, closes the separating clutch (30) and swings out the hydraulic motor (3) to a displacement volume greater than zero.

3. Hydrostatic drive according to claim 1,
**characterized in**
**that** the first sensor device comprises a first sensor (25) for detecting the rotational speed of the drive shaft (20) of the multi-step shift transmission (4) and the second sensor device comprises a second sensor (26) for detecting the rotational speed of the output-side drive shaft (6).

4. Hydrostatic drive according to claim 2,
**characterized in**
**that** the first sensor device comprises a first sensor (25) for detecting the rotational speed of the shift-transmission-side drive shaft portion (32) of the hydraulic-motor-side drive shaft portion (19, 31) and the second sensor device comprises a second sensor (33) for detecting the rotational speed of the hydraulic-motor-side drive shaft portion (19, 31).

5. Hydrostatic drive according to a preceding claim,
**characterized by** a further adjusting device (14) connected to the electronic control unit (5) for adjusting the displacement volume of the hydraulic pump (2) in dependence upon control signals of the electronic control unit (5).

6. Hydrostatic drive according to claim 5, wherein the rotational speed of the drive motor is adjustable,
**characterized by** a third sensor (27) connected to the electronic control unit (5) for detecting the rotational speed of the drive motor (1).

7. Hydrostatic drive according to claim 6,
**characterized in**
**that** the electronic control unit (5) controls the further adjusting device (14) in such a way that, as the rotational speed of the drive motor (1) increases, the hydraulic pump (2) swings out to a greater displacement volume.

8. Hydrostatic drive according to one of claims 5 to 7,
**characterized in**
**that** the electronic control unit (5) during each shift operation controls the further adjusting device (14) in such a way that the displacement volume of the hydraulic pump (2) remains constant.

9. Hydrostatic drive according to claim 8,
**characterized in**
**that** the electronic control unit (5) controls the further adjusting device (14) in such a way that the hydraulic pump (2), given a rotational speed below the maximum rotational speed of the drive motor (1), is swung out to maximum displacement volume.

10. Hydrostatic drive according to a preceding claim,
**characterized by** a pressure limiting device (17, 18) for pressure protection of the hydraulic circuit of the hydrostatic transmission (2, 3, 16).

11. Hydrostatic drive according to a preceding claim,
**characterized in**
**that** the electronic control unit (5), when a stored shift point is reached, automatically controls at least one shift operation of the multi-step shift transmission (4).

12. Hydrostatic drive according to claim 11,
**characterized in**
**that** the stored shift point corresponds to a rotational speed value of the drive motor (1) in the rotational speed range above the rotational speed, at which the hydraulic pump (2) is swung out to maximum displacement volume.

13. Hydrostatic drive according to a preceding claim,
**characterized in**
**that** the drive shaft (19, 20) and/or the hydraulic-motor-side drive shaft portion (19, 31) comprises a hydraulic-motor-side drive shaft section (19) and a shift-transmission-side drive shaft section (31).

14. Hydrostatic drive according to claim 13,
**characterized by** a direct through-drive shaft (23) which couples the hydraulic pump (2) mechanically to the shift-transmission-side drive shaft section (31), by a further separating clutch (24) disposed in said direct through-drive shaft, and by a further actuating device (28) which is connected to the electronic control unit (5) and in dependence upon control signals of the electronic control unit (5) opens and closes the further separating clutch (24).

15. Hydrostatic drive according to claim 14,
**characterized in**
**that** the electronic control unit (5), when a further stored shift point is reached, automatically controls the further actuating device (28) in such a way that the further separating clutch (24) closes when the rotational speed of the drive motor (1) increases and opens when the rotational speed drops, and that said further shift point corresponds to a further rotational speed value of the drive motor (1) above the previously mentioned rotational speed value.

16. Hydrostatic drive according to claim 15,
**characterized in**
**that** the electronic control unit (5) upon control of the further actuating device (28) for the purpose of closing the further separating clutch (24) controls the adjusting devices (15) in such a way that the hydraulic pump (2) and the hydraulic motor (3) are swung back to zero displacement volume.

## Revendications

1. Entraînement hydrostatique, en particulier pour véhicules, comprenant
- un moteur d'entraînement (1),
- une transmission hydrostatique (2, 3, 16) dont le rapport de démultiplication est réglable, et qui englobe au moins deux machines hydrauliques (2, 3) agencées en un circuit hydraulique et revêtant la forme d'une pompe hydraulique (2) entraînée par le moteur d'entraînement, et d'un moteur hydraulique (3), ainsi qu'un dispositif de réglage (15) réglant le rapport de démultiplication (i = volume refoulé par la pompe hydraulique/volume refoulé par le moteur hydraulique) en fonction de signaux de réglage,
- une transmission mécanique étagée (4) qui est reliée au moteur hydraulique (3) par l'intermédiaire d'un arbre d'entraînement (19, 20), et englobe un dispositif de commutation (9) exécutant les processus de commutation en fonction de signaux de commutation, et
- une unité de commande électronique (5) qui est raccordée à un premier dispositif détecteur (25) pour détecter la vitesse angulaire d'entrée de la transmission étagée (4), ainsi qu'au dispositif de réglage (15) et au dispositif de commutation (9), et qui, en vue d'exécuter un processus de commutation, active à la fois ledit dispositif de commutation (9) et ledit dispositif de réglage (15), de façon telle que la vitesse respectivement supérieure ou inférieure soit enclenchée, et que le rapport de démultiplication de la transmission hydrostatique (2, 3, 16) soit diminué lors du passage à la vitesse supérieure et augmenté lors du rétrogradage, en concordance avec la variation de vitesse angulaire occasionnée par le changement de rapport,
sachant que le moteur hydraulique (3) est un moteur hydraulique réversible dont le volume refoulé est réglable au moyen du dispositif de réglage (15),
sachant qu'il est prévu un deuxième dispositif détecteur (26) pour détecter la vitesse angulaire de sortie de la transmission étagée (4), et
sachant que, lors de chaque processus de commutation,
- par activation correspondante du dispositif de réglage (15) et du dispositif de commutation (9), l'unité de commande électronique (5) imprime un pivotement rétrograde au moteur hydraulique (3) jusqu'à un volume refoulé nul, et désengage la vitesse respectivement enclenchée,
- l'unité de commande électronique (5) compare mutuellement les signaux de sortie des premier et deuxième dispositifs détecteurs (25, 26) et imprime au moteur hydraulique (3) un pivotement sortant jusqu'à un volume refoulé supérieur à zéro, par activation correspondante du dispositif de réglage (15), tant lors du passage à la vitesse supérieure vers le quadrant correspondant au fonctionnement en mode inversé, que lors du rétrogradage à l'intérieur du quadrant initial, jusqu'à ce que les signaux de sortie des dispositifs détecteurs (25, 26) indiquent que le rapport, entre la vitesse angulaire d'entrée et la vitesse angulaire de sortie de la transmission étagée (4), correspond au rapport de démultiplication de la vitesse respectivement supérieure ou inférieure, et
- l'unité de commande électronique (5) imprime au moteur hydraulique (3) un pivotement rétrograde jusqu'à un volume refoulé nul, par activation correspondante du dispositif de réglage (15) ; engage la vitesse respectivement supérieure ou inférieure, par activation correspondante du dispositif de commutation (9) ; et imprime audit moteur hydraulique (3) un pivotement sortant jusqu'à un volume refoulé supérieur à zéro, par activation correspondante dudit dispositif de réglage (15).

2. Entraînement hydrostatique, en particulier pour véhicules, comprenant
- un moteur d'entraînement (1),
- une transmission hydrostatique (2, 3, 16) dont le rapport de démultiplication est réglable, et qui englobe au moins deux machines hydrauliques (2, 3) agencées en un circuit hydraulique et revêtant la forme d'une pompe hydraulique (2) entraînée par le moteur d'entraînement, et d'un moteur hydraulique (3), ainsi qu'un dispositif de réglage (15) réglant le rapport de démultiplication (i = volume refoulé par la pompe hydraulique/volume refoulé par le moteur hydraulique) en fonction de signaux de réglage,
- une transmission mécanique étagée (4) qui est reliée au moteur hydraulique (3) par l'intermédiaire d'un arbre d'entraînement (19, 20), et englobe un dispositif de commutation (9) exécutant les processus de commutation en fonction de signaux de commutation, et
- une unité de commande électronique (5) qui est raccordée à un premier dispositif détecteur (25) pour détecter la vitesse angulaire d'entrée de la transmission étagée (4), ainsi qu'au dispositif de réglage (15) et au dispositif de commutation (9), et qui, en vue d'exécuter un processus de commutation, active à la fois ledit dispositif de commutation (9) et ledit dispositif de réglage (15), de façon telle que la vitesse respectivement supérieure ou inférieure soit enclenchée, et que le rapport de démultiplication de la transmission hydrostatique (2, 3, 16) soit diminué lors du passage à la vitesse supérieure et augmenté lors du rétrogradage, en concordance avec la variation de vitesse angulaire occasionnée par le changement de rapport,
- et un accouplement de débrayage (30) logé dans l'arbre d'entraînement (19, 31, 32), et scindant ce dernier en un segment (19, 31) situé côté moteur hydraulique et en un segment (32) situé côté transmission, ainsi qu'un dispositif d'actionnement (34) ouvrant et fermant l'accouplement de débrayage (30) en fonction de signaux de commande,
le moteur hydraulique (3) étant un moteur hydraulique réversible dont le volume refoulé est réglable au moyen du dispositif de réglage (15), un deuxième dispositif détecteur (33) étant prévu pour détecter la vitesse angulaire du moteur hydraulique sur l'accouplement de débrayage (30), et
sachant que, lors de chaque processus de commutation,
- par activation correspondante du dispositif de réglage (15), du dispositif d'actionnement (34) et du dispositif de commutation (9), l'unité de commande électronique (5) imprime au moteur hydraulique (3) un pivotement rétrograde jusqu'à un volume refoulé nul ; ouvre l'accouplement de débrayage (30) ; et commute la transmission étagée (4) à la vitesse devant être respectivement enclenchée,
- l'unité de commande électronique (5) compare mutuellement les signaux de sortie des dispositifs détecteurs (25, 33) et imprime au moteur hydraulique (3) un pivotement sortant jusqu'à un volume refoulé supérieur à zéro, par activation correspondante du dispositif de réglage (15), tant lors du passage à la vitesse supérieure vers le quadrant correspondant au fonctionnement en mode inversé, que lors du rétrogradage à l'intérieur du quadrant initial, jusqu'à ce que les signaux de sortie desdits dispositifs détecteurs (25, 33) indiquent que la différence de vitesse angulaire est pour l'essentiel égale à zéro sur l'accouplement de débrayage (30), et
- par activation correspondante du dispositif de réglage (15) et du dispositif d'actionnement (34), l'unité de commande électronique (5) imprime un pivotement rétrograde au moteur hydraulique (3) jusqu'à un volume refoulé nul ; ferme l'accouplement de débrayage (30) ; et imprime audit moteur hydraulique (3) un pivotement sortant jusqu'à un volume refoulé supérieur à zéro.

3. Entraînement hydrostatique selon la revendication 1,
**caractérisé par le fait**
**que** le premier dispositif détecteur renferme un premier capteur (25) pour détecter la vitesse angulaire de l'arbre d'entraînement (20) de la transmission étagée (4), et le deuxième dispositif détecteur renferme un deuxième capteur (26) pour détecter la vitesse angulaire de l'arbre d'entraînement (6) situé côté sortie.

4. Entraînement hydrostatique selon la revendication 2,
**caractérisé par le fait**
**que** le premier dispositif détecteur renferme un premier capteur (25) pour détecter la vitesse angulaire du segment (32) d'arbre d'entraînement situé côté transmission ; et le deuxième dispositif détecteur renferme un deuxième capteur (33) pour détecter la vitesse angulaire du segment (19, 31) d'arbre d'entraînement situé côté moteur hydraulique.

5. Entraînement hydrostatique selon une revendication précédente,
**caractérisé par** un dispositif de réglage (14) supplémentaire, raccordé à l'unité de commande électronique (5) pour régler le volume refoulé par la pompe hydraulique (2) en fonction de signaux de commande provenant de ladite unité de commande électronique (5).

6. Entraînement hydrostatique selon la revendication 5, la vitesse angulaire du moteur d'entraînement étant réglable,
**caractérisé par** un troisième capteur (27) raccordé à l'unité de commande électronique (5), pour détecter la vitesse angulaire dudit moteur d'entraînement (1).

7. Entraînement hydrostatique selon la revendication 6,
**caractérisé par le fait**
**que** l'unité de commande électronique (5) active le dispositif de réglage (14) supplémentaire, de façon telle que la pompe hydraulique (2) passe à un volume refoulé supérieur lorsque la vitesse angulaire du moteur d'entraînement (1) croît.

8. Entraînement hydrostatique selon l'une des revendications 5 à 7,
**caractérisé par le fait**
**que** l'unité de commande électronique (5) active le dispositif de réglage (14) supplémentaire, au cours de chaque processus de commutation, de façon telle que le volume refoulé par la pompe hydraulique (2) demeure constant.

9. Entraînement hydrostatique selon la revendication 8,
**caractérisé par le fait**
**que** l'unité de commande électronique (5) active le dispositif de réglage (14) supplémentaire, de façon telle que la pompe hydraulique (2) soit passée à un volume refoulé maximal en présence d'une vitesse angulaire inférieure à la vitesse angulaire maximale du moteur d'entraînement (1).

10. Entraînement hydrostatique selon une revendication précédente,
**caractérisé par** un dispositif (17, 18) limiteur de pression, en vue de la sûreté manométrique du circuit hydraulique de la transmission hydrostatique (2, 3, 16).

11. Entraînement hydrostatique selon une revendication précédente,
**caractérisé par le fait**
**que** l'unité de commande électronique (5) commande automatiquement au moins un processus de commutation de la transmission étagée (4) lorsqu'un point de commutation mémorisé est atteint.

12. Entraînement hydrostatique selon la revendication 11,
**caractérisé par le fait**
**que** le point de commutation mémorisé correspond à une valeur de vitesse angulaire du moteur d'entraînement (1), dans la plage de vitesse angulaire supérieure à la vitesse angulaire à laquelle la pompe hydraulique (2) est passée à un volume refoulé maximal.

13. Entraînement hydrostatique selon une revendication précédente,
**caractérisé par le fait**
**que** l'arbre d'entraînement (19, 20) ou, respectivement, le segment (19, 31) d'arbre d'entraînement situé côté moteur hydraulique, comprend un tronçon (19) d'arbre d'entraînement situé côté moteur hydraulique et un tronçon (31) d'arbre d'entraînement situé côté transmission.

14. Entraînement hydrostatique selon la revendication 13,
**caractérisé par** un arbre d'entraînement direct (23), couplant mécaniquement la pompe hydraulique (2) au tronçon (31) d'arbre d'entraînement situé côté transmission ; par un accouplement de débrayage (24) supplémentaire, logé dans ledit arbre ; et par un dispositif d'actionnement (28) supplémentaire, raccordé à l'unité de commande électronique (5), et ouvrant et fermant l'accouplement de débrayage (24) supplémentaire en fonction de signaux de commande provenant de ladite unité de commande électronique (5).

15. Entraînement hydrostatique selon la revendication 14,
**caractérisé par le fait**
**que**, lorsqu'un point de commutation mémorisé supplémentaire est atteint, l'unité de commande électronique (5) active automatiquement le dispositif d'actionnement (28) supplémentaire, de façon telle que l'accouplement de débrayage (24) supplémentaire se ferme lorsque la vitesse angulaire du moteur d'entraînement (1) croît, et s'ouvre lorsque ladite vitesse angulaire diminue ; et par le fait que ce point de commutation supplémentaire correspond à une valeur supplémentaire de vitesse angulaire du moteur d'entraînement (1) supérieure à la valeur de vitesse angulaire mentionnée précédemment.

16. Entraînement hydrostatique selon la revendication 15,
**caractérisé par le fait**
**que**, lors d'une activation du dispositif d'actionnement (28) supplémentaire, en vue de fermer l'accouplement de débrayage (24) supplémentaire, l'unité de commande électronique (5) active le dispositif de réglage (15) de façon telle que la pompe hydraulique (2) et le moteur hydraulique (3) soient ramenés à des volumes refoulés nuls.
